# EUROPÄISCHE PATENTANMELDUNG

(11) **EP 3 410 072 A1**
(43) Veröffentlichungstag der Anmeldung: **05.12.2018**
(21) Anmeldenummer: 18020111.3
(22) Anmeldetag: 18.03.2016
(51) Int. Cl.: G01C 21/36, G01C 21/32

(54) **ERMITTELN EINER ZUSATZINFORMATION ZU EINEM HALTEORT**

(30) Priorität: 18.03.2015 DE 102015003476
(62) Teilanmeldung aus: 16161117.3
(71) Anmelder: Preh Car Connect GmbH, 01056 Dresden (DE)
(72) Erfinder: KOLANKO, Jan, 01056 Dresden (DE)

(57) **Zusammenfassung**

Die Erfindung betrifft ein Verfahren zum Betreiben eines Navigationssystems (3) eines Fahrzeugs (1), das zur Ermittlung und Ausgabe einer Fahrtroute (22) zu einem von einem Nutzer des Navigationssystems (3) vorgebbaren Fahrtziel ausgebildet ist, wobei eine Datenbank (10) für von dem Nutzer auswählbare Datenbankeinträge, die jeweils ein Fahrtziel aufweisen, geführt wird, ein Ort, an dem das Fahrzeug (1) anhält, als ein zu speichernder Halteort (17, 18) eingestuft wird, wenn ein vorgegebenes erstes Bewertungskriterium erfüllt ist, und für jeden als Halteort (17, 18) eingestuften Ort automatisch eine Zielinformation, die eine Position des Halteortes (17, 18) und eine dem Halteort (17, 18) zugeordnete Zusatzinformation aufweist, ermittelt wird, wobei ermittelt wird, ob eine Adressdatenbank eines mit dem Navigationssystem verbundenen Mobilgerätes (15) verfügbar ist, die einen Adressdatenbankeintrag mit einer Kontaktadresse in einer Nähe des Halteortes (17, 18) aufweist, und, wenn das der Fall ist, eine Information des Adressdatenbankeintrags als dem Halteort (17, 18) zugeordnete Zusatzinformation gespeichert wird.

## Beschreibung

Die Erfindung betrifft ein Navigationssystem zur Ermittlung und Ausgabe einer Fahrtroute für ein Fahrzeug und ein Verfahren zum Betreiben eines derartigen Navigationssystems.

Bekannte Navigationssysteme für Fahrzeuge berechnen in effizienter Weise Fahrtrouten und führen darauf basierend Zielführungen durch, um einen Nutzer abhängig von Kartenmaterial und weiteren Informationsquellen mit möglichst effektiver Unterstützung zu einem vorgebbaren Fahrtziel zu führen. Als Zielführung wird ein Prozess bezeichnet, der den Nutzer entlang einer Fahrtroute leitet. Fahrtroutenberechnung und Zielführung werden hierin unter dem Begriff "Navigation" zusammengefasst.

Dadurch erleichtert ein Navigationssystem einem Nutzer die Fahrt in unbekanntem Terrain und ermöglicht dem Nutzer, sich stärker auf das Verkehrsgeschehen zu konzentrieren, da die Routenführung vom Navigationssystem übernommen wird. Trotzdem ist die Hemmschwelle zur Nutzung eines Navigationssystems in einem dem Nutzer weitgehend bekannten Gebiet recht hoch. Das liegt daran, dass der Nutzer aufgrund seiner guten Kenntnis des Gebietes es möglicherweise als unverhältnismäßig aufwändig erachtet, für ein unbekanntes oder neues Ziel in diesem Gebiet eine Adresseingabe vorzunehmen oder irgendwann eine bestimmte Position abzulegen, beispielsweise durch Abspeichern einer aktuellen Position.

Auf verschiedene Weise wird versucht, den Komfort und die Bedienung eines Navigationssystems zu verbessern und die Bereitschaft zur Verwendung eines Navigationssystems zu steigern. Es sind beispielsweise Navigationssysteme bekannt, die in Abhängigkeit von der Tageszeit, dem Wochentag und/oder dem aktuellen Standort wiederkehrende Fahrtrouten vorschlagen und so dem Nutzer die Eingabe erleichtern. Insbesondere wird versucht, die Navigation den Gewohnheiten des Nutzers anzupassen. Unter dem Begriff "selbst lernende Navigation" sind bereits einige Techniken bekannt und fließen in verschiedene Bereiche der Navigation ein, die den Nutzer mit Zusatzinformationen unterstützen oder eine Fahrtroute an bestimmte Gewohnheiten des Nutzers anpassen.

Der Erfindung liegt die Aufgabe zu Grunde, ein insbesondere hinsichtlich seines Bedienungskomforts und seines Bedienungsumfangs verbessertes Navigationssystem zur Ermittlung und Ausgabe einer Fahrtroute für ein Fahrzeug und ein entsprechend verbessertes Verfahren zum Betreiben eines derartigen Navigationssystems anzugeben. Unter einem Fahrzeug wird hierin ein mobiles Verkehrsmittel verstanden, zum Beispiel ein Kraftfahrzeug oder ein Fahrrad, aber auch ein Luftfahrzeug oder ein Wasserfahrzeug.

Die Aufgabe wird erfindungsgemäß hinsichtlich des Verfahrens durch die Merkmale des Anspruchs 1 und hinsichtlich des Navigationssystems durch die Merkmale des Anspruchs 11 gelöst.

Vorteilhafte Ausgestaltungen der Erfindung sind Gegenstand der Unteransprüche.

Mit dem erfindungsgemäßen Verfahren wird ein Navigationssystem eines Fahrzeugs betrieben, das zur Ermittlung und Ausgabe einer Fahrtroute zu einem von einem Nutzer des Navigationssystems vorgebbaren Fahrtziel ausgebildet ist. Dabei wird eine Datenbank für von dem Nutzer auswählbare Datenbankeinträge geführt, die jeweils ein Fahrtziel aufweisen, wobei die Datenbank in einer Speichereinheit gespeichert ist. Ferner wird ein Ort, an dem das Fahrzeug anhält, als ein zu speichernder Halteort eingestuft, wenn ein vorgegebenes erstes Bewertungskriterium erfüllt ist, und für jeden als Halteort eingestuften Ort wird automatisch eine Zielinformation ermittelt, welche eine Position des Halteortes und eine dem Halteort zugeordnete Zusatzinformation aufweist.

Außerdem werden mehrere Halteorte als zusammenzufassen eingestuft, wenn ein vorgegebenes zweites Bewertungskriterium erfüllt ist. Die Zielinformationen für die Halteorte, die als zusammenzufassen eingestuft werden, werden automatisch zu einem Datenbankeintrag zusammengefasst und in der Datenbank gespeichert. Die Zielinformation für jeden Halteort, der nicht als mit einem anderen Halteort zusammenzufassen eingestuft wird, wird entweder als ein separater Datenbankeintrag der Datenbank oder unabhängig, das heißt getrennt, von der Datenbank gespeichert, zum Beispiel in einem von der Datenbank separierten elektronischen System in derselben Speichereinheit, oder in einer anderen Speichereinheit.

Bei dem erfindungsgemäßen Verfahren wird also automatisch, d. h. ohne Veranlassung oder Einwirkung des Nutzers des Navigationssystems, eine Zielinformation, die die Position eines Halteortes, an welchem das Fahrzeug anhält, und eine dem Halteort zugeordnete Zusatzinformation aufweist, ermittelt und gespeichert, sofern der Halteort ein erstes Bewertungskriterium erfüllt. Ferner werden die für mehrere dieser Halteorte ermittelten Zielinformationen zu einem Datenbankeintrag zusammengefasst, sofern diese Halteorte ein zweites Bewertungskriterium erfüllen. Der Datenbankeintrag kann von dem Nutzer ausgewählt werden.

Durch eine geeignete Wahl der Bewertungskriterien können dadurch für den Nutzer potenziell relevante Orte automatisch als von dem Nutzer auswählbare Fahrtziele gespeichert werden, ohne dass der Nutzer die Speicherung dieser Orte veranlassen oder durchführen muss. Das Verfahren ermöglicht daher eine automatische Erweiterung von dem Nutzer auswählbarer Fahrtziele des Navigationssystems, die die Nutzung des Navigationssystems erleichtert, indem sie dem Nutzer die Auswahl und Speicherung neuer potenziell relevanter Fahrtziele teilweise abnimmt. Dadurch werden der Komfort und die Bedienung des Navigationssystems verbessert. Außerdem werden durch eine Betätigung des Navigationssystems verursachte Ablenkungen des Nutzers von dem Verkehrsgeschehen und somit die Gefahr von Unfällen und gefährlichen Fahrmanövern reduziert.

Eine Ausgestaltung der Erfindung sieht vor, dass ein erster Zeitschwellenwert und ein zweiter Zeitschwellenwert vorgegeben werden, und dass das erste Bewertungskriterium als eine Bedingung dafür, einen Ort als einen zu speichernden Halteort einzustufen, aufweist, dass das Fahrzeug an dem Ort wenigstens für die Dauer des ersten Zeitschwellenwertes mit ausgeschaltetem Motor und ausgeschalteter Zielführungsfunktion des Navigationssystems oder wenigstens für die Dauer des zweiten Zeitschwellenwertes mit ausgeschaltetem Motor und eingeschalteter Zielführungsfunktion des Navigationssystems verbleibt.

Diese Ausgestaltung der Erfindung macht die Einstufung eines Ortes als einen zu speichernden Halteort von der Dauer des Anhaltens des Fahrzeugs und dem Ausschalten des Motors des Fahrzeugs abhängig. Dies ist vorteilhaft, da in der Regel nur diejenigen Orte interessante neue Fahrtziele sind, an denen das Fahrzeug längere Zeit abgestellt wird. Ferner vermag die vorgenannte Ausgestaltung der Erfindung zusätzlich zu berücksichtigen, ob die Zielführungsfunktion des Navigationssystems eingeschaltet ist. Dies berücksichtigt vorteilhaft, dass das Fahrtziel einer Fahrt bei einer eingeschalteten Zielführungsfunktion dem Navigationssystem bereits bekannt ist und es daher weniger wahrscheinlich ist, dass auf einer derartigen Fahrt potenziell relevante Fahrtziele, die dem Navigationssystem bisher noch unbekannt sind, angefahren werden.

Alternativ dazu gilt das erste Bewertungskriterium dann als erfüllt, wenn das Fahrzeug für eine vorgegebene Zeitdauer an einer geografischen Position verbleibt, wenn das Fahrzeug von allen Fahrzeuginsassen verlassen wird, wenn ein Fahrzeugschlüssel von dem Fahrzeug entfernt wird oder wenn eine Wegfahrsperre des Fahrzeugs aktiviert wird.

Eine weitere Ausgestaltung der Erfindung sieht vor, dass als Fahrtziel eines Datenbankeintrags für als zusammenzufassen eingestufte Halteorte ein die gespeicherten Positionen dieser Halteorte aufweisendes Zielgebiet in der Datenbank gespeichert wird.

Diese Ausgestaltung ermöglicht vorteilhaft, ein mehrfach angefahrenes Zielgebiet als Fahrtziel in der Datenbank abzulegen, statt einzelne Orte in diesem Zielgebiet als separate Orte abzulegen.

Eine Weitergestaltung der vorgenannten Ausgestaltung der Erfindung sieht vor, dass bei einer Auswahl eines Fahrtziels, das als ein Zielgebiet in der Datenbank gespeichert ist, eine Fahrtroute zu einem Randort auf einem Rand des Zielgebiets ermittelt wird.

Diese Weitergestaltung berücksichtigt vorteilhaft, dass sich ein Nutzer in einem häufig angefahrenen Zielgebiet in der Regel bereits auskennt, so dass es genügt, eine Fahrtroute zu einem Randort auf einem Rand des Zielgebiets auszugeben.

Eine weitere Ausgestaltung der Erfindung sieht vor, dass eine Bewertungsentfernungsdifferenz vorgegeben wird, und dass das zweite Bewertungskriterium als eine Bedingung dafür, mehrere Halteorte als zusammenzufassen einzustufen, aufweist, dass die Positionen jedes Paares dieser Halteorte nicht mehr als die Bewertungsentfernungsdifferenz voneinander entfernt sind. Das heißt, dass der Abstand zwischen den Positionen (Luftlinie) oder die kürzeste Verbindung zwischen den Positionen über Straßen oder Wege kleiner oder gleich der Bewertungsentfernungsdifferenz ist.

Diese Ausgestaltung der Erfindung macht die Zusammenfassung verschiedener Halteorte zu einem Datenbankeintrag von einer räumlichen Nähe der Halteorte abhängig. Dies berücksichtigt vorteilhaft, dass eine Korrelation weit voneinander entfernter Orte unwahrscheinlich ist und eine Zuweisung eines gemeinsamen Fahrtziels zu weit voneinander entfernter Orte nicht sinnvoll ist.

Dabei wird als Zielgebiet vorzugsweise ein Gebiet mit dem Durchmesser der vorgegebenen Bewertungsentfernungsdifferenz der oben bereits genannten Ausgestaltung der Erfindung gespeichert.

Dadurch wird die Größe des Zielgebiets sinnvoll an die vorgegebene Bewertungsentfernungsdifferenz gekoppelt. Unter dem Durchmesser eines Gebiets wird dabei gemäß einer allgemeinen mathematischen Definition des Begriffs "Durchmesser" das Supremum aller Abstände je zweier Punkte des Gebiets verstanden. Der Begriff "Durchmesser" ist daher insbesondere nicht auf kreisförmige Gebiete beschränkt.

Weitergestaltungen der beiden vorgenannten Ausgestaltungen der Erfindung sehen vor, dass eine Bewertungsuhrzeitdifferenz, eine Bewertungsanzahldifferenz und/oder eine Bewertungsbelegungsdifferenz vorgegeben werden und das zweite Bewertungskriterium als Bedingung dafür, Halteorte als zusammenzufassen einzustufen, aufweist, dass sich Uhrzeiten, zu denen die Halteorte erreicht werden, nicht mehr als die Bewertungsuhrzeitdifferenz voneinander unterscheiden, dass sich erfasste Fahrzeuginsassenanzahlen von Fahrzeuginsassen des Fahrzeugs bei dem Erreichen der Halteorte um nicht mehr als die Bewertungsanzahldifferenz voneinander unterscheiden, beziehungsweise dass sich erfasste Kofferraumbelegungen eines Kofferraums des Fahrzeugs bei dem Erreichen der Halteorte um nicht mehr als die Bewertungsbelegungsdifferenz voneinander unterscheiden.

Diese Weitergestaltungen der beiden vorgenannten Ausgestaltungen der Erfindung ermöglichen vorteilhaft, mittels Verfeinerungen des zweiten Bewertungskriteriums weitere Aspekte zu berücksichtigen, die für oder gegen eine Zusammenfassung verschiedener Halteorte zu einem Datenbankeintrag sprechen. Insbesondere wird berücksichtigt, dass ähnliche Uhrzeiten, zu denen die Halteorte erreicht werden, und/oder ähnliche Fahrzeuginsassenanzahlen und/oder Kofferraumbelegungen bei dem Erreichen von Halteorten für eine Zusammenfassung der Halteorte zu einem Datenbankeintrag sprechen.

Weitere Ausgestaltungen der Erfindung sehen vor, dass als eine einem Halteort zugeordnete Zusatzinformation ein Straßenname einer Straße, an der oder in einer Nähe derer sich der Halteort befindet, ein Name einer Sehenswürdigkeit, die sich in einer Nähe des Halteortes befindet, ein Name eines öffentlichen Gebäudes, das sich in einer Nähe des Halteortes befindet, und/oder ein Ortsname eines Orts oder eines Ortsteils, in dem sich der Halteort befindet, ermittelt und gespeichert werden.

Diese Ausgestaltungen ermöglichen vorteilhaft, Halteorte mit sinnvollen Begriffen als Zusatzinformationen zu verknüpfen und erleichtern dem Nutzer dadurch die Verwendung der Datenbank.

Eine weitere Ausgestaltung der Erfindung sieht vor, dass für jeden Halteort geprüft wird, ob eine Adressdatenbank eines Mobilgerätes, zum Beispiel eines Mobilgeräts des Nutzers oder eines anderen Fahrzeuginsassen, zur Auswertung verfügbar ist, und dass für jede verfügbare derartige Adressdatenbank ermittelt wird, ob die Adressdatenbank einen Adressdatenbankeintrag mit einer Kontaktadresse in einer Nähe des Halteortes aufweist. Ferner wird für jede dabei gefundene Kontaktadresse in einer Nähe des Halteortes zumindest eine Information des dazu gehörenden Adressdatenbankeintrags als eine dem Halteort zugeordnete Zusatzinformation gespeichert.

Diese Ausgestaltung der Erfindung ermöglicht, Kontaktadressen des Nutzers mit Halteorten zu verknüpfen und zu deren Kennzeichnung zu verwenden. Dadurch können Halteorte sinnvoll mit individuellen Daten und Präferenzen des Nutzers korreliert werden.

Eine weitere Ausgestaltung der Erfindung sieht vor, dass während einer Fahrt des Fahrzeugs automatisch in Abhängigkeit von einer aktuellen Position des Fahrzeugs und/oder von einer Fahrtrichtung der Fahrt und/oder von einer aktuellen Uhrzeit ein Datenbankeintrag der Datenbank mit einem für die Fahrt wahrscheinlichen Fahrtziel ermittelt, aktualisiert und als ein von dem Nutzer auswählbares Fahrtziel ausgegeben wird.

Diese Ausgestaltung der Erfindung ermöglicht es, dem Nutzer des Navigationssystems automatisch während einer Fahrt Vorschläge für wahrscheinliche Fahrtziele zu unterbreiten, die der Nutzer auswählen kann. Die Ausgestaltung richtet sich insbesondere auf Fahrten, für die der Nutzer bei Fahrtantritt kein Fahrtziel ausgewählt hat, und nimmt dem Nutzer somit die Eingabe eines Fahrtziels ab. Der Nutzer braucht also vorteilhaft nur noch automatisch vorgeschlagene Fahrtziele zu prüfen und gegebenenfalls ein vorgeschlagenes Fahrtziel auszuwählen.

Ein erfindungsgemäßes Navigationssystem umfasst eine Navigationssteuereinheit zur Ermittlung einer Fahrtroute für ein Fahrzeug zu einem von einem Nutzer des Navigationssystems vorgebbaren Fahrtziel, eine Ausgabeeinheit zur Ausgabe einer ermittelten Fahrtroute und eine Speichereinheit zur Speicherung einer Datenbank, in der von dem Nutzer auswählbare Datenbankeinträge, die jeweils ein Fahrtziel aufweisen, speicherbar sind.

Dabei ist die Navigationssteuereinheit dazu ausgebildet, einen Ort, an dem das Fahrzeug anhält, zu ermitteln und als einen zu speichernden Halteort einzustufen, wenn ein vorgegebenes erstes Bewertungskriterium erfüllt ist, für jeden als Halteort eingestuften Ort automatisch eine Zielinformation, die eine Position des Halteortes und eine dem Halteort zugeordnete Zusatzinformation aufweist, zu ermitteln, mehrere Halteorte als zusammenzufassen einzustufen, wenn ein vorgegebenes zweites Bewertungskriterium erfüllt ist, die Zielinformationen für die Halteorte, die als zusammenzufassen eingestuft werden, zu einem Datenbankeintrag zusammenzufassen und in der Datenbank zu speichern, und die ermittelte Zielinformation für jeden Halteort, der nicht als mit einem anderen Halteort zusammenzufassen eingestuft wird, entweder als einen separaten Datenbankeintrag der Datenbank oder unabhängig von der Datenbank zu speichern.

Ein derartiges Navigationssystem ermöglicht dessen Betreiben gemäß dem erfindungsgemäßen Verfahren mit den oben genannten Vorteilen.

Ausführungsbeispiele der Erfindung werden im Folgenden anhand von Zeichnungen näher erläutert.

Dabei zeigen:
Figur 1 ein Blockdiagramm eines Fahrzeugs mit einem in dem Fahrzeug angeordneten Navigationssystem,
Figur 2 ein Flussdiagramm eines Verfahrens zum Betreiben eines Navigationssystems, und
Figur 3 eine Ausgabeeinheit eines Navigationssystems, auf dem eine Fahrtroute zu einem Randort eines Zielgebiets dargestellt ist.

Einander entsprechende Teile sind in den Figuren mit den gleichen Bezugszeichen versehen.

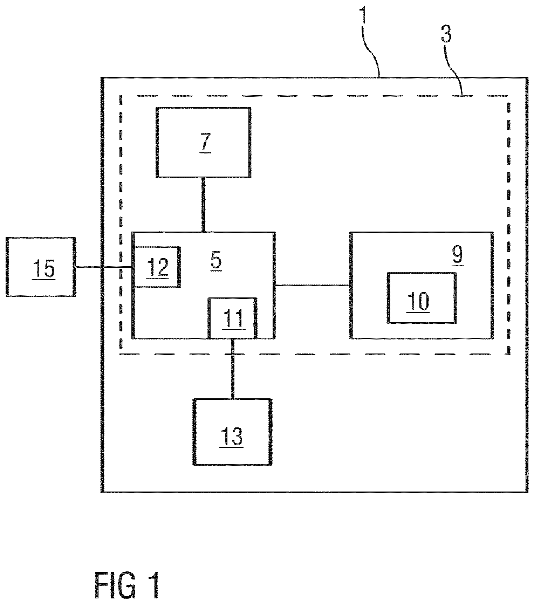

**Figur 1** zeigt ein Blockdiagramm eines Fahrzeugs 1 mit einem in dem Fahrzeug angeordneten Navigationssystem 3 zur Ermittlung und Ausgabe einer Fahrtroute für das Fahrzeug 1 zu einem von einem Nutzer des Navigationssystems 3 vorgebbaren Fahrtziel.

Das Navigationssystem 3 umfasst eine Navigationssteuereinheit 5 zur Ermittlung einer Fahrtroute zu einem vorgebbaren Fahrtziel, eine Ausgabeeinheit 7 zur Ausgabe einer ermittelten Fahrtroute und eine Speichereinheit 9 zur Speicherung insbesondere einer Datenbank 10, in der von dem Nutzer auswählbare Datenbankeinträge, die jeweils ein Fahrtziel aufweisen, speicherbar sind. Optional umfasst das Navigationssystem 3 ferner eine erste Schnittstelle 11, über die das Navigationssystem 3 mit einem Sensorsystem 13 des Fahrzeugs 1 verbindbar ist, und/oder eine zweite Schnittstelle 12, über die das Navigationssystem 3 mit einem Mobilgerät 15, zum Beispiel einem Mobilgerät 15 des Nutzers des Navigationssystems 3, verbindbar ist. Die

Schnittstellen 11, 12 und/oder die Speichereinheit 9 können in die Navigationssteuereinheit 5 integriert sein.

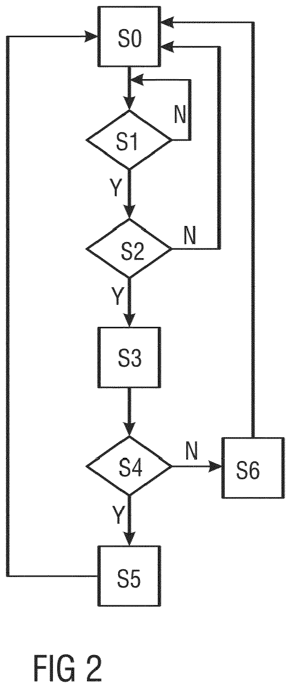

Im Folgenden wird neben Figur 1 auch auf Figur 2 Bezug genommen.

**Figur 2** zeigt ein Flussdiagramm eines Verfahrens zum Betreiben des in Figur 1 dargestellten Navigationssystems 3, das in dem Fahrzeug 1 angeordnet ist. Bei dem Verfahren werden ein erstes Bewertungskriterium und ein zweites Bewertungskriterium vorgegeben. Anhand des ersten Bewertungskriteriums wird bewertet, ob ein Ort, an dem das Fahrzeug 1 anhält, als ein zu speichernder Halteort eingestuft wird. Anhand des zweiten Bewertungskriteriums wird entschieden, ob mehrere Halteorte als zusammenzufassen eingestuft werden.

Eine Initialisierung S0 des Verfahrens wird an einen Fahrtbeginn einer Fahrt des Fahrzeugs 1 gekoppelt. Ein Fahrtbeginn wird von der Navigationssteuereinheit 5 beispielsweise durch eine Auswertung von Signalen eines eine Geschwindigkeit des Fahrzeugs 1 erfassenden Geschwindigkeitssensors des Sensorsystems 13 erkannt, die dem Navigationssystem 3 über die erste Schnittstelle 11 übermittelt werden. Alternativ oder zusätzlich wird ein Fahrtbeginn von der Navigationssteuereinheit 5 beispielsweise durch eine Auswertung von Funksignalen, z. B. von GPS-Signalen (GPS = Global Positioning System) erkannt, die die Navigationssteuereinheit 5 zur Bestimmung einer Position des Fahrzeugs 1 empfängt und auswertet.

Danach wird in einem ersten Verfahrensschritt S1 geprüft, ob das Fahrzeug 1 anhält, das heißt angehalten hat. Der erste Verfahrensschritt S1 wird solange wiederholt, bis erkannt wird, dass das Fahrzeug 1 anhält. Die Wiederholung kann in einem bestimmten zeitlichen Abstand erfolgen, zum Beispiel in einem Abstand von 60 Sekunden, so dass ein Anhalten sicher erkannt wird. Auch das Anhalten des Fahrzeugs 1 wird von der Navigationssteuereinheit 5 beispielsweise durch eine Auswertung von Signalen eines eine Geschwindigkeit des Fahrzeugs 1 erfassenden Geschwindigkeitssensors des Sensorsystems 13 erkannt, die dem Navigationssystem 3 über eine erste Schnittstelle 11 übermittelt werden, und/oder durch eine Auswertung von Funksignalen, die es zur Bestimmung einer Position des Fahrzeugs 1 empfängt und auswertet.

Wenn erkannt wird, dass das Fahrzeug 1 anhält, wird in einem zweiten Verfahrensschritt S2 anhand des ersten Bewertungskriteriums bewertet, ob der Ort, an dem das Fahrzeug anhält, als ein zu speichernder Halteort eingestuft wird. Wenn der Ort nicht als ein Halteort eingestuft wird, wird das Verfahren beendet und nach einem erneuten Fahrtbeginn neu initialisiert.

Wenn ein Ort in dem zweiten Verfahrensschritt S2 als Halteort eingestuft wird, wird in einem dritten Verfahrensschritt S3 eine Zielinformation, die eine Position des Halteortes und eine dem Halteort zugeordnete Zusatzinformation aufweist, ermittelt.

In einem vierten Verfahrensschritt S4 wird anschließend anhand des zweiten Bewertungskriteriums bewertet, ob der Halteort als mit einem bereits bekannten Halteort zusammenzufassen eingestuft wird.

Wenn der Halteort in dem vierten Verfahrensschritt S4 als mit einem anderen Halteort zusammenzufassen eingestuft wird, werden in einem fünften Verfahrensschritt S5 die Zielinformationen der als zusammenzufassen eingestuften Halteorte zu einem Datenbankeintrag zusammengefasst und in der Datenbank 10 gespeichert. Andernfalls wird in einem sechsten Verfahrensschritt S6 die für den Halteort ermittelte Zielinformation entweder als ein separater neuer Datenbankeintrag in der Datenbank 10 oder unabhängig von der Datenbank 10 gespeichert, zum Beispiel in einem von der Datenbank getrennten elektronischen System. Sowohl nach dem fünften Verfahrensschritt S5 als auch nach dem sechsten Verfahrensschritt S6 wird das Verfahren beendet und nach einem erneuten Fahrtbeginn neu initialisiert.

Alle Verfahrensschritte S1 bis S6 werden automatisch, d. h. ohne Veranlassung oder Einwirkung des Nutzers des Navigationssystems 3 von der Navigationssteuereinheit 5 ausgeführt. Dadurch werden durch das Navigationssystem 3 automatisch Fahrtziele, die für den Nutzer potenziell relevant sind, gespeichert und für den Nutzer auswählbar gemacht, ohne dass der Nutzer diese Speicherung selbst veranlassen oder durchführen muss.

Als Fahrtziel eines Datenbankeintrags für als zusammenzufassen eingestufte Halteorte wird vorzugsweise ein die gespeicherten Positionen dieser Halteorte aufweisendes Zielgebiet in der Datenbank 10 gespeichert. Die Navigationssteuereinheit 5 ist beispielsweise dazu ausgebildet, bei einer von dem Nutzer vorgenommenen Auswahl eines Fahrtziels, das als ein derartiges Zielgebiet in der Datenbank 10 gespeichert ist, eine Fahrtroute zu einem Randort auf einem Rand des Zielgebiets zu ermitteln.

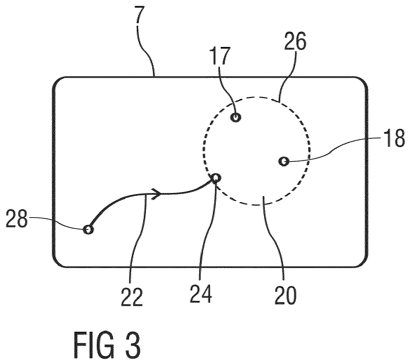

Im Folgenden wird neben Figur 1 auch auf Figur 3 Bezug genommen.

**Figur 3** zeigt schematisch eine als eine Anzeigeeinheit ausgebildete Ausgabeeinheit 7, auf der zwei als zusammenzufassen eingestufte Halteorte 17, 18, ein dazu gehöriges Zielgebiet 20 mit einem Rand 26 sowie eine Fahrtroute 22 von einem Startort 28 zu einem Randort 24 auf dem Rand 26 des Zielgebiets 20 dargestellt sind.

Das Zielgebiet 20 ist in diesem Fall kreisförmig ausgebildet, kann jedoch stattdessen rechteckig ausgebildet sein oder eine andere Form haben. Als Randort 24 wird vorzugsweise ein Ort auf dem Rand 26 des Zielgebiets 20 derart ermittelt, dass die Fahrtroute 22 möglichst kurz ist oder eine Fahrzeit zur Zurücklegung der Fahrtroute 22 möglichst gering ist.

Für das oben genannte erste Bewertungskriterium werden beispielsweise ein erster Zeitschwellenwert und ein zweiter Zeitschwellenwert vorgegeben, und als Bedingung dafür, einen Ort als einen zu speichernden Halteort 17, 18 einzustufen, wird vorgegeben, dass das Fahrzeug 1 an dem Ort wenigstens für die Dauer des ersten Zeitschwellenwertes mit ausgeschaltetem Motor und ausgeschalteter Zielführungsfunktion des Navigationssystems 3 oder wenigstens für die Dauer des zweiten Zeitschwellenwertes mit ausgeschaltetem Motor und eingeschalteter Zielführungsfunktion des Navigationssystems 3 anhält.

Zur Bewertung eines Ortes anhand des ersten Bewertungskriteriums wird von der Navigationssteuereinheit 5 eine Zeitdauer erfasst, die das Fahrzeug 1 an dem Ort anhält, und die erfasste Zeitdauer wird mit dem ersten Zeitschwellenwert verglichen, falls der Motor des Fahrzeugs 1 und die Zielführungsfunktion des Navigationssystems 3 ausgeschaltet sind, oder die erfasste Zeitdauer wird mit dem zweiten Zeitschwellenwert verglichen, falls der Motor des Fahrzeugs 1 ausgeschaltet ist und die Zielführungsfunktion des Navigationssystems 3 eingeschaltet ist. Typischerweise wird der zweite Zeitschwellenwert größer als der erste Zeitschwellenwert gewählt.

Für das oben genannte zweite Bewertungskriterium wird beispielsweise eine Bewertungsentfernungsdifferenz vorgegeben, und als eine Bedingung dafür, mehrere Halteorte 17, 18 als zusammenzufassen einzustufen, wird vorgegeben, dass die Positionen jedes Paares zweier dieser Halteorte 17, 18 nicht mehr als die Bewertungsentfernungsdifferenz voneinander entfernt sind. Dementsprechend wird von der Navigationssteuereinheit 5 für je zwei Halteorte 17, 18 geprüft, ob sie nicht mehr als die Bewertungsentfernungsdifferenz voneinander entfernt sind, um zu entscheiden, ob sie als zusammenzufassen eingestuft werden. In diesem Fall wird als Fahrtziel für als zusammenzufassen eingestufte Halteorte 17, 18 beispielsweise ein Zielgebiet 20 mit dem Durchmesser der vorgegebenen Bewertungsentfernungsdifferenz gespeichert.

Alternativ dazu kann das zweite Bewertungskriterium andere Bedingungen dafür aufweisen, Halteorte 17, 18 als zusammenzufassen einzustufen. Diese Bedingungen werden in den folgenden Beispielen erläutert:
In einem Beispiel wird eine Bewertungsuhrzeitdifferenz vorgegeben, und als Bedingung dafür, Halteorte 17, 18 als zusammenzufassen einzustufen, wird verwendet, dass sich Uhrzeiten, zu denen die Halteorte 17, 18 erreicht werden, nicht mehr als die Bewertungsuhrzeitdifferenz voneinander unterscheiden. In diesem Fall werden dementsprechend Uhrzeiten, zu denen die Halteorte 17, 18 erreicht werden, erfasst und verglichen.

In einem anderen Beispiel wird eine Bewertungsanzahldifferenz vorgegeben, und als Bedingung dafür, Halteorte 17, 18 als zusammenzufassen einzustufen, wird verwendet, dass sich erfasste Fahrzeuginsassenanzahlen von Fahrzeuginsassen des Fahrzeugs 1 bei dem Erreichen der Halteorte 17, 18 um nicht mehr als die Bewertungsanzahldifferenz voneinander unterscheiden. Dies setzt voraus, dass Fahrzeuginsassenanzahlen von Fahrzeuginsassen des Fahrzeugs 1 erfasst werden. Eine Fahrzeuginsassenanzahl wird von der Navigationssteuereinheit 5 beispielsweise durch eine Auswertung von dem Navigationssystem 3 über eine erste Schnittstelle 11 übermittelten Signalen geeigneter Sensoren des Fahrzeugs 1 ermittelt, beispielsweise von Sensoren zur Erfassung einer Sitzplatzbelegung und/oder Gurtbenutzung und/oder eines einen Fahrzeuginnenraum des Fahrzeugs 1 erfassenden optischen Sensors.

In einem weiteren Beispiel wird eine Bewertungsbelegungsdifferenz vorgegeben, und als Bedingung dafür, Halteorte 17, 18 als zusammenzufassen einzustufen, wird verwendet, dass sich erfasste Kofferraumbelegungen eines Kofferraums des Fahrzeugs 1 bei dem Erreichen der Halteorte 17, 18 um nicht mehr als die Bewertungsbelegungsdifferenz voneinander unterscheiden. Eine Kofferraumbelegung wird von der Navigationssteuereinheit 5 beispielsweise durch eine Auswertung von dem Navigationssystem 3 über eine erste Schnittstelle 11 übermittelten Signalen eines geeigneten Sensors des Fahrzeugs 1 ermittelt, der eine Kofferraumbeladung erfasst.

In einer anderen Ausgestaltung der Erfindung wird als Bedingung dafür, Halteorte 17, 18 als zusammenzufassen einzustufen, eine Kombination aus mehreren der oben genannten Bedingungen, Halteorte 17, 18 als zusammenzufassen einzustufen, verwendet.

Als eine dem Halteort 17, 18 zugeordnete Zusatzinformation wird beispielsweise ein Straßenname einer Straße, an der oder in einer Nähe derer sich der Halteort 17, 18 befindet, und/oder ein Name einer Sehenswürdigkeit, die sich in einer Nähe des Halteortes 17, 18 befindet, und/oder ein Name eines öffentlichen Gebäudes, das sich in einer Nähe des Halteortes 17, 18 befindet, und/oder ein Ortsname eines Orts oder eines Ortsteils, in dem sich der Halteort 17, 18 befindet, ermittelt.

Optional wird ferner für jeden Halteort 17, 18 geprüft, ob eine Adressdatenbank eines über eine zweite Schnittstelle 12 mit dem Navigationssystem 3 verbundenen Mobilgerätes 15 wie eines Mobiltelefons und/oder eines Flachrechners (engl.: Tablet), zum Beispiel eines Mobilgerätes 15 des Nutzers, zur Auswertung verfügbar ist. Für jede verfügbare derartige Adressdatenbank wird ermittelt, ob die Adressdatenbank einen Adressdatenbankeintrag mit einer Kontaktadresse in einer Nähe des Halteortes 17, 18 aufweist. Für jede dabei gefundene Kontaktadresse in einer Nähe des Halteortes 17, 18 wird zumindest eine Information des dazu gehörenden Adressdatenbankeintrags als eine dem Halteort 17, 18 zugeordnete Zusatzinformation gespeichert.

Alternativ oder zusätzlich dazu kann ermittelt werden, ob und welche anderen Kommunikationsgeräte mit einem Mobilgerät 15 beim Erreichen des Halteortes 17, 18 verbunden sind und dies wird als eine dem Halteort 17, 18 zugeordnete Zusatzinformation gespeichert. Sind weitere Adressdatenbanken zusätzlicher Mobilgeräte verfügbar, kann die zweite Schnittstelle 12 dazu eingerichtet sein, eine Verbindung zu den zusätzlichen Mobilgeräten aufzubauen. Zum Beispiel wird zunächst eine Verbindung mit dem Mobilgerät des Nutzers des Navigationssystems 3 aufgebaut und anschließend eine Verbindung mit einem zusätzlichen Mobilgerät eines weiteren Fahrzeuginsassen.

Vorzugsweise wird während einer Fahrt des Fahrzeugs 1 automatisch in Abhängigkeit von einer aktuellen Position des Fahrzeugs 1 und/oder von einer Fahrtrichtung der Fahrt und/oder von einer aktuellen Uhrzeit ein Datenbankeintrag der Datenbank 10 mit einem für die Fahrt wahrscheinlichen Fahrtziel ermittelt, aktualisiert und als ein von dem Nutzer auswählbares Fahrtziel mittels der Ausgabeeinheit 7 ausgegeben. Dies wird insbesondere durchgeführt, wenn der Nutzer das Fahrzeug 1 nutzt, ohne selbst bei Fahrtantritt ein Fahrtziel für die Fahrt eingegeben oder ausgewählt zu haben. Der Nutzer braucht dann nur noch ein vorgeschlagenes Fahrtziel auswählen, um eine Zielführung zu dem ausgewählten Fahrtziel zu starten.

Wenn z. B. in der Datenbank 10 bereits ein Datenbankeintrag gespeichert ist, der als Fahrtziel eine Arbeitsstelle des Nutzers aufweist und dieses Fahrtziel mit einer regelmäßigen morgendlichen Fahrtantrittszeit (beispielsweise wochentags 7 Uhr) verknüpft ist, wird an den Nutzer bei einem Fahrtantritt zu dieser Fahrtantrittszeit beispielsweise das Fahrtziel "Arbeitsstelle" als vorgeschlagenes Fahrtziel ausgegeben. Wenn während der Fahrt jedoch festgestellt wird, dass die Fahrt wahrscheinlich ein anderes Fahrtziel hat, da die Fahrtrichtung der Fahrt von der Richtung zu der Arbeitsstelle abweicht, wird ein neues vorzuschlagendes Fahrtziel ermittelt und an den Nutzer ausgegeben, beispielsweise ein vorgeschlagenes Fahrtziel, das unter allen Datenbankeinträgen der Datenbank 10 ein in der aktuellen Fahrtrichtung nächstgelegenes Fahrtziel repräsentiert.

Alternativ oder zusätzlich kann ein vorgeschlagenes Fahrtziel ausgegeben werden, das unter allen Datenbankeinträgen der Datenbank 10 ein der aktuellen Fahrzeugposition nächstgelegenes Fahrtziel repräsentiert. Ferner kann bei der Ermittlung eines vorzuschlagenden Fahrtziels berücksichtigt werden, ob ein bestimmtes Handy mit dem Navigationssystem gekoppelt ist, oder ob die Beladung des Fahrzeugs 1 auf eine längere Reise hindeutet. Die vorgeschlagenen Fahrtziele werden in Abhängigkeit von den Änderungen der Fahrzeugposition des Fahrzeugs 1 und der Fahrtrichtung der Fahrt aktualisiert und gegebenenfalls geändert.

Gemäß einem ersten Aspekt der Erfindung wird ein Verfahren zum Betreiben eines Navigationssystems (3) eines Fahrzeugs (1) bereitgestellt, das zur Ermittlung und Ausgabe einer Fahrtroute (22) zu einem von einem Nutzer des Navigationssystems (3) vorgebbaren Fahrtziel ausgebildet ist, wobei
- eine Datenbank (10) für von dem Nutzer auswählbare Datenbankeinträge, die jeweils ein Fahrtziel aufweisen, geführt wird,
- ein Ort, an dem das Fahrzeug (1) anhält, als ein zu speichernder Halteort (17, 18) eingestuft wird, wenn ein vorgegebenes erstes Bewertungskriterium erfüllt ist,
- für jeden als Halteort (17, 18) eingestuften Ort automatisch eine Zielinformation, die eine Position des Halteortes (17, 18) und eine dem Halteort (17, 18) zugeordnete Zusatzinformation aufweist, ermittelt wird,
- mehrere Halteorte (17, 18) als zusammenzufassen eingestuft werden, wenn ein vorgegebenes zweites Bewertungskriterium erfüllt ist,
- die Zielinformationen für die Halteorte (17, 18), die als zusammenzufassen eingestuft werden, automatisch zu einem Datenbankeintrag zusammengefasst und in der Datenbank (10) gespeichert werden, und
- die Zielinformation für jeden Halteort (17, 18), der nicht als mit einem anderen Halteort (17, 18) zusammenzufassen eingestuft wird, entweder als ein separater Datenbankeintrag der Datenbank (10) oder unabhängig von der Datenbank (10) gespeichert wird.

Gemäß einem zweiten Aspekt der Erfindung werden ein erster Zeitschwellenwert und ein zweiter Zeitschwellenwert vorgegeben und das erste Bewertungskriterium gilt als erfüllt, wenn das Fahrzeug (1) an dem Ort für die Dauer des ersten Zeitschwellenwertes mit ausgeschaltetem Motor und ausgeschalteter Zielführungsfunktion des Navigationssystems (3) anhält oder das Fahrzeug (1) an dem Ort für die Dauer des zweiten Zeitschwellenwertes mit ausgeschaltetem Motor und eingeschalteter Zielführungsfunktion des Navigationssystems (3) anhält.

Gemäß einem dritten Aspekt der wird als Fahrtziel eines Datenbankeintrags für als zusammenzufassen eingestufte Halteorte (17, 18) ein die gespeicherten Positionen dieser Halteorte (17, 18) aufweisendes Zielgebiet (20) in der Datenbank (10) gespeichert.

Gemäß einem vierten Aspekt der Erfindung wird bei einer Auswahl des Fahrtziels, das als das Zielgebiet (20) in der Datenbank (10) gespeichert ist, eine Fahrtroute (22) zu einem Randort (24) auf einem Rand (26) des Zielgebiets (20) ermittelt.

Gemäß einem fünften Aspekt der Erfindung wird eine Bewertungsentfernungsdifferenz vorgegeben und das zweite Bewertungskriterium gilt als erfüllt, wenn die Positionen jedes Paares der Halteorte (17, 18) nicht mehr als die Bewertungsentfernungsdifferenz voneinander entfernt sind.

Gemäß einem sechsten Aspekt der Erfindung wird als Zielgebiet (20) ein Gebiet mit dem Durchmesser der vorgegebenen Bewertungsentfernungsdifferenz gespeichert.

Gemäß einem siebenten Aspekt der Erfindung werden eine Bewertungsuhrzeitdifferenz, eine Bewertungsanzahldifferenz und/oder eine Bewertungsbelegungsdifferenz vorgegeben und das zweite Bewertungskriterium gilt als erfüllt, wenn sich Uhrzeiten, zu denen die Halteorte (17, 18) erreicht werden, um nicht mehr als die Bewertungsuhrzeitdifferenz voneinander unterscheiden, wenn sich erfasste Fahrzeuginsassenanzahlen von Fahrzeuginsassen des Fahrzeugs (1) bei dem Erreichen der Halteorte (17, 18) um nicht mehr als die Bewertungsanzahldifferenz voneinander unterscheiden, beziehungsweise wenn sich erfasste Kofferraumbelegungen eines Kofferraums des Fahrzeugs (1) bei dem Erreichen der Halteorte (17, 18) um nicht mehr als die Bewertungsbelegungsdifferenz voneinander unterscheiden.

Gemäß einem achten Aspekt der Erfindung werden als Zusatzinformation ein Straßenname einer Straße, an der oder in einer Nähe derer sich der Halteort (17, 18) befindet, ein Name einer Sehenswürdigkeit, die sich in einer Nähe des Halteortes (17, 18) befindet, ein Name eines öffentlichen Gebäudes, das sich in einer Nähe des Halteortes (17, 18) befindet, und/oder ein Ortsname eines Orts oder eines Ortsteils, in dem sich der Halteort (17, 18) befindet, ermittelt und gespeichert.

Gemäß einem neunten Aspekt der Erfindung wird für jeden Halteort (17, 18) geprüft, ob eine Adressdatenbank eines Mobilgerätes (15) zur Auswertung verfügbar ist, und, wenn das der Fall ist, wird für die Adressdatenbank ermittelt, ob die Adressdatenbank einen Adressdatenbankeintrag mit einer Kontaktadresse in einer Nähe des Halteortes (17, 18) aufweist, und, wenn das der Fall ist, wird für die Kontaktadresse eine Information des dazu gehörenden Adressdatenbankeintrags als eine dem Halteort (17, 18) zugeordnete Zusatzinformation gespeichert.

Gemäß einem zehnten Aspekt der Erfindung wird während einer Fahrt des Fahrzeugs (1) automatisch in Abhängigkeit von einer aktuellen Position des Fahrzeugs (1) und/oder von einer Fahrtrichtung der Fahrt und/oder von einer aktuellen Uhrzeit ein Datenbankeintrag der Datenbank (10) mit einem für die Fahrt wahrscheinlichen Fahrtziel ermittelt, aktualisiert und als ein von dem Nutzer auswählbares Fahrtziel ausgegeben.

Gemäß einem elften Aspekt der Erfindung wird eine Navigationssteuereinheit (5) zur Ermittlung einer Fahrtroute (22) für ein Fahrzeug (1) zu einem von einem Nutzer des Navigationssystems (3) vorgebbaren Fahrtziel bereitgestellt, umfassend
- eine Ausgabeeinheit (7) zur Ausgabe einer ermittelten Fahrtroute (22) und
- eine Speichereinheit (9) zur Speicherung einer Datenbank (10), in der von dem Nutzer auswählbare Datenbankeinträge, die jeweils ein Fahrtziel aufweisen, speicherbar sind, wobei die Navigationssteuereinheit (5) dazu ausgebildet ist,
- einen Ort, an dem das Fahrzeug (1) anhält, zu ermitteln und als einen zu speichernden Halteort (17, 18) einzustufen, wenn ein vorgegebenes erstes Bewertungskriterium erfüllt ist,
- für jeden als Halteort (17, 18) eingestuften Ort automatisch eine Zielinformation, die eine Position des Halteortes (17, 18) und eine dem Halteort (17, 18) zugeordnete Zusatzinformation aufweist, zu ermitteln,
- mehrere Halteorte (17, 18) als zusammenzufassen einzustufen, wenn ein vorgegebenes zweites Bewertungskriterium erfüllt ist,
- die Zielinformationen für die Halteorte (17, 18), die als zusammenzufassen eingestuft werden, zu einem Datenbankeintrag zusammenzufassen und in der Datenbank (10) zu speichern, und
- die Zielinformation für jeden Halteort (17, 18), der nicht als mit einem anderen Halteort (17, 18) zusammenzufassen eingestuft wird, entweder als einen separaten Datenbankeintrag der Datenbank (10) oder unabhängig von der Datenbank (10) zu speichern.

## Patentansprüche

1. Verfahren zum Betreiben eines Navigationssystems (3) eines Fahrzeugs (1), das zur Ermittlung und Ausgabe einer Fahrtroute (22) zu einem von einem Nutzer des Navigationssystems (3) vorgebbaren Fahrtziel ausgebildet ist, wobei
- eine Datenbank (10) für von dem Nutzer auswählbare Datenbankeinträge, die jeweils ein Fahrtziel aufweisen, geführt wird,
- ein Ort, an dem das Fahrzeug (1) anhält, als ein zu speichernder Halteort (17, 18) eingestuft wird, wenn ein vorgegebenes erstes Bewertungskriterium erfüllt ist, und
- für jeden als Halteort (17, 18) eingestuften Ort automatisch eine Zielinformation, die eine Position des Halteortes (17, 18) und eine dem Halteort (17, 18) zugeordnete Zusatzinformation aufweist, ermittelt wird,
wobei ermittelt wird, ob eine Adressdatenbank eines mit dem Navigationssystem verbundenen Mobilgerätes (15) verfügbar ist, die einen Adressdatenbankeintrag mit einer Kontaktadresse in einer Nähe des Halteortes (17, 18) aufweist, und, wenn das der Fall ist, eine Information des Adressdatenbankeintrags als dem Halteort (17, 18) zugeordnete Zusatzinformation gespeichert wird.

2. Verfahren nach Anspruch 1,
**dadurch gekennzeichnet, dass** ein erster Zeitschwellenwert und ein zweiter Zeitschwellenwert vorgegeben werden und das erste Bewertungskriterium als erfüllt gilt, wenn das Fahrzeug (1) an dem Ort für die Dauer des ersten Zeitschwellenwertes mit ausgeschaltetem Motor und ausgeschalteter Zielführungsfunktion des Navigationssystems (3) anhält oder das Fahrzeug (1) an dem Ort für die Dauer des zweiten Zeitschwellenwertes mit ausgeschaltetem Motor und eingeschalteter Zielführungsfunktion des Navigationssystems (3) anhält.

3. Verfahren nach Anspruch 1,
**dadurch gekennzeichnet, dass** das erste Bewertungskriterium dann als erfüllt gilt, wenn das Fahrzeug (1) für eine vorgegebene Zeitdauer an einer geografischen Position verbleibt, wenn das Fahrzeug (1) von allen Fahrzeuginsassen verlassen wird, wenn ein Fahrzeugschlüssel von dem Fahrzeug (1) entfernt wird oder wenn eine Wegfahrsperre des Fahrzeugs (1) aktiviert wird.

4. Verfahren nach einem der vorhergehenden Ansprüche,
**dadurch gekennzeichnet, dass** als Zusatzinformation ein Straßenname einer Straße, an der oder in einer Nähe derer sich der Halteort (17, 18) befindet, ein Name einer Sehenswürdigkeit, die sich in einer Nähe des Halteortes (17, 18) befindet, ein Name eines öffentlichen Gebäudes, das sich in einer Nähe des Halteortes (17, 18) befindet, und/oder ein Ortsname eines Orts oder eines Ortsteils, in dem sich der Halteort (17, 18) befindet, ermittelt und gespeichert werden.

5. Verfahren nach einem der vorhergehenden Ansprüche,
**dadurch gekennzeichnet, dass** ermittelt wird, welche anderen Kommunikationsgeräte mit dem Mobilgerät (15) beim Erreichen des Halteortes (17, 18) verbunden sind und dies als dem Halteort (17, 18) zugeordnete Zusatzinformation gespeichert wird.

6. Verfahren nach einem der vorhergehenden Ansprüche,
**dadurch gekennzeichnet, dass** mittels des Navigationssystems (3) eine Verbindung zu zusätzlichen Mobilgeräten aufgebaut wird, wenn deren Adressdatenbanken verfügbar sind.

7. Verfahren nach einem der vorhergehenden Ansprüche,
**dadurch gekennzeichnet, dass** während einer Fahrt des Fahrzeugs (1) automatisch in Abhängigkeit von einer aktuellen Position des Fahrzeugs (1) und/oder von einer Fahrtrichtung der Fahrt und/oder von einer aktuellen Uhrzeit ein Datenbankeintrag der Datenbank (10) mit einem für die Fahrt wahrscheinlichen Fahrtziel ermittelt, aktualisiert und als ein von dem Nutzer auswählbares Fahrtziel ausgegeben wird.

8. Verfahren nach einem der vorhergehenden Ansprüche,
**dadurch gekennzeichnet, dass** ein Fahrtziel ausgegeben wird, das unter allen Datenbankeinträgen der Datenbank (10) ein der aktuellen Position des Fahrzeugs (1) nächstgelegenes Fahrtziel repräsentiert.

9. Verfahren nach einem der vorhergehenden Ansprüche,
**dadurch gekennzeichnet, dass** bei der Ermittlung eines Fahrtziels berücksichtigt wird, ob ein bestimmtes Handy mit dem Navigationssystem (3) gekoppelt ist oder eine Beladung des Fahrzeugs (1) auf eine längere Reise hindeutet.

10. Navigationssystem (3), umfassend
- eine Navigationssteuereinheit (5) zur Ermittlung einer Fahrtroute (22) für ein Fahrzeug (1) zu einem von einem Nutzer des Navigationssystems (3) vorgebbaren Fahrtziel,
- eine Ausgabeeinheit (7) zur Ausgabe einer ermittelten Fahrtroute (22) und
- eine Speichereinheit (9) zur Speicherung einer Datenbank (10), in der von dem Nutzer auswählbare Datenbankeinträge, die jeweils ein Fahrtziel aufweisen, speicherbar sind,
wobei die Navigationssteuereinheit (5) dazu ausgebildet ist,
- einen Ort, an dem das Fahrzeug (1) anhält, zu ermitteln und als einen zu speichernden Halteort (17, 18) einzustufen, wenn ein vorgegebenes erstes Bewertungskriterium erfüllt ist, und
- für jeden als Halteort (17, 18) eingestuften Ort automatisch eine Zielinformation, die eine Position des Halteortes (17, 18) und eine dem Halteort (17, 18) zugeordnete Zusatzinformation aufweist, zu ermitteln,
wobei ermittelt wird, ob eine Adressdatenbank eines mit dem Navigationssystem verbundenen Mobilgerätes (15) verfügbar ist, die einen Adressdatenbankeintrag mit einer Kontaktadresse in einer Nähe des Halteortes (17, 18) aufweist, und, wenn das der Fall ist, eine Information des Adressdatenbankeintrags als dem Halteort (17, 18) zugeordnete Zusatzinformation gespeichert wird.
